# EUROPEAN PATENT SPECIFICATION

(11) **EP 3 208 992 B1**
(45) Date of publication and mention of the grant of the patent: **26.09.2018**
(21) Application number: 17155820.8
(22) Date of filing: 13.02.2017
(51) Int. Cl.: G06F 3/16, G05B 15/02, H04H 60/04, H04L 29/06

(54) **COMMUNICATION SYSTEM, CONTROL DEVICE AND METHOD FOR COMMUNICATING AUDIO SIGNALS BETWEEN MULTIPLE CONTROL DEVICES**
KOMMUNIKATIONSSYSTEM ZUR KOMMUNIKATION VON AUDIOSIGNALEN ZWISCHEN MEHREREN STEUERUNGSVORRICHTUNGEN
SYSTÈME DE COMMUNICATION POUR LA COMMUNICATION DE SIGNAUX AUDIO ENTRE DE MULTIPLES DISPOSITIFS DE COMMANDE

(30) Priority: 16.02.2016 EP 16155893
(43) Date of publication of application: 23.08.2017
(73) Proprietor: Sennheiser Communications A/S, 2750 Ballerup (DK)
(72) Inventor: NYEGAARD, Lars Elliot, DK-2750 Ballerup (DK); ERN, Christian, DK-2750 Ballerup (DK); JESSEN, Andreas, DK-2750 Ballerup (DK)
(74) Representative: William Demant

(56) References cited:
- US-A1- 2011 130 203
- US-A1- 2014 064 519

## Description

### TECHNICAL FIELD

The disclosure relates to a communication system configured for enabling chatting between gamers, wherein each gamer is communicating with other gamers by a respective control device.

### BACKGROUND

For computer games where users are divided into multiple teams competing against each other, it is important to the individual user in each team to hear his teammates clearly with low latency. Therefore, the preferred solution for these kind of computer games is to connect the headsets and game exchange gear together through some sort of analogue or digital chat connection. Online chat solutions like Skype or other internet based chat solutions are not preferred because they have too much latency and can be unstable.

There is a need for a simple solution which can be set-up by individuals without training as well as being easy to control for each individual user.

Patent US 8,602,892 B1 centralizes all audio from each gaming console and distributes it out to each individual user. This is a complex setup and does not allow each individual user any controls. The solution requires a technician as also described in the patent to control the sound distribution in the system.

Patent US 8,571,695 B1 discloses a communication daisy chaining which is a relatively simple method to achieve game chat audio sharing. The system offers little control for each individual user, specifically there are no controls of the sound level of the microphone signal from each individual user that is sent over the daisy chain connection.

US 2014/064519 A1 discloses a distributed self-scaling network audio processing system including end nodes interconnected by packet-switched network and operating as peers on the network.

US 2011/130203 A1 discloses methods and systems for providing multiple audio streams, such as a Game Audio stream and Network Chat audio stream, to a headset of a user of a game console.

There is a need to provide a solution that addresses at least some of the above-mentioned problems.

### SUMMARY

An object of the present disclosure is to provide a communication system and a control device which provide an improved control of audio signals received and/or transmitted by each control device.

A further object of the present disclosure is to provide a communication system and a control device which are easier to use and easier to couple with other control devices while keeping the convenience to each user since the control device can be placed within reach of the users allowing them personal controls.

An object of the present disclosure is to provide a communication system for communicating a plurality of audio signals between a plurality of control devices, wherein the plurality of control devices comprises at least a subsequent control device and at least a preceding control device. Each control device of the plurality of control devices comprises; an audio port configured to receive a local voice signal of a user of the control device, wherein the local voice signal may be extended into a first local voice signal and a second local voice signal. Additionally, the control device comprises a primary audio input port configured to receive a first audio signal of the plurality of audio signals transmitted by the subsequent control device, wherein the first audio signal comprises a second voice signal of a second user of the subsequent control device, and a secondary audio input port configured to receive a second audio signal of the plurality of audio signals transmitted by the preceding control device, wherein the second audio signal comprises a third voice signal of a third user of the preceding control device. Furthermore, the control device comprises a primary audio output port configured to transmit a third audio signal of the plurality of audio signals comprising the first local voice signal and the second audio signal to the subsequent control device, and a secondary audio output port configured to transmit a fourth audio signal of the plurality of audio signals comprising the second local voice signal and the first audio signal to the preceding control device. Additionally, the control device comprises an internal audio mixer configured to mix the first audio signal and the second audio signal into an internal audio signal, and wherein the primary audio input port and the primary audio output port of the control device may be coupled to the secondary audio output port and the secondary audio input port of the subsequent control device, respectively, and wherein the secondary audio input port and the secondary audio output port of the control device may be coupled to the primary audio output port and the primary audio input port of the preceding control device, respectively, and wherein the control device comprises a first volume controller configured to control the sound level of the first local voice signal and the second local voice signal and a second volume controller configured to control the sound level of the internal audio signal and transmit the internal audio signal to the audio port.

The advantage of having the first volume controller and the second volume controller is that the user of the control device is able to control the sound level of the local voice signal being transmitted to the other control devices, i.e. the first local voice signal and the second local voice signal.

A further advantage of having the first volume controller and the second volume controller is that the user of the control device is able to control the sound level of the received voices of the other users of the other control devices separated from the local voice signal being transmitted to the other control devices.

The user which is part of a gaming team including multiple other users of other control devices. In a situation where a user wants to chat with another user and do not want the other to disturb the chatting, the user is able to communicate to one or more of the other users of the other control devices to lower their sound level. Thereby, the control device gives the user the possibility of controlling or affecting each sound level of each voice signal received by the control device. The improved ability of controlling the sound level of voice signals has a side effect of improving the experience of gaming in a team.

An advantage of the communication system is that the control devices are easy to use and easy to couple together while keeping the convenience of each control device to the respective user because the control device can be placed within reach of the users allowing them personal controls.

The audio port may comprise a wireless interface and/or a wired interface. Thereby, the audio port may be configured to receive the local voice signal of the user of the control device via a wired connection or a wireless connection from a headset, hearing aid including own voice detection or a headphone. The audio port may be configured to receive a phono plug, a jack plug, an USB plug or any other audio plug.

The control device may be configured to be coupled wirelessly or wired via the audio port to a hearing device, such as a headset, a headphone or a hearing aid including own voice detection.

Furthermore, the audio port may be configured to receive the internal audio signal and transmit the internal audio signal to a hearing device, such as a headset, a headphone or a hearing aid with an own voice detection.

The local voice signal may be extended into a third local voice signal, and the control device may comprise a third volume controller configured to control the sound level of the third local voice signal and transmit the third local voice signal to the audio port.

The local voice signal may be extended into multiple local voice signals comprising the same information, i.e. the same local voice signal. In the present disclosure, the local voice signal may be extended into the first local voice signal, the second local voice signal and the third local voice signal.

Additionally, the audio port may be configured to receive the third local voice signal and transmit the third local voice signal to a hearing device, such as a headset, a headphone or a hearing aid with an own voice detection.

The control device may be configured to combine the output of the second volume controller with the output of the third volume controller generating a combined sound output signal. The control device may further be configured to transmit the combined sound output signal to the audio port.

Additionally, the audio port may be configured to receive the combined sound output signal and transmit the combined sound output signal to a hearing device, such as a headset, a headphone or a hearing aid with an own voice detection.

The audio port may be configured to receive and transmit one or more audio signals, such as the local voice signal from the user of the control device, the combined sound output signal, the third local voice signal and/or the internal audio signal.

In one or more embodiments, the audio port may be divided into a first audio port and a second audio port, where the first audio port may be configured to receive audio signals, such as the local voice signal from the user of the control device, and where the second audio port is configured to transmit the combined sound output signal, the third local voice signal and/or the internal audio signal.

The communication system may include a plurality of control devices comprising at least a control device, a subsequent control device and a preceding control device inter-coupled or interconnected in a sequence with respect to each other so that each control devices receive the voice signals of the other users of the other control devices of the plurality of control devices.

The user of the control device receives its local voice signal via the control device and a hearing device connected to the control device. The local voice signal may be separated from the voice signals of the other users of the other control devices. The user receives the voice signals of the other users through the sequentially inter-coupling of the other control devices with the control device and the hearing device connected to the control device.

The control device may receive the local voice signal from a microphone connected to the control device via the first audio port and via the second audio port receives voice signals from other microphones connected to other control devices, respectively.

In the sequentially inter-coupling of the control devices the primary audio input port and the primary audio output port of the control device may be coupled to the secondary audio output port and the secondary audio input port of the subsequent control device, respectively, and the secondary audio input port and the secondary audio output port of the control device may be coupled to the primary audio output port and the primary audio input port of the preceding control device, respectively.

The plurality of control devices may be connected or coupled to each other in an open communication loop. In the open communication loop at least a subsequent control device and a preceding control device may have a primary audio input port or a secondary audio input port not connected to another control device, and a primary audio output port or a secondary audio output port not connected to another control device.

The communication system communicates the plurality of audio signals, where the audio signals may include the first audio signal which may be transmitted by the subsequent control device, and the audio signals may further include the second audio signal which may be transmitted by the preceding control device. Additionally, the audio signals may include the third audio signal and the fourth audio signal transmitted by the control device.

In a use situation, the first audio signal and the second audio signal may comprise one or more voice signals of other users of other control devices of the plurality of control devices. The primary audio input port and the primary output port may be combined into a primary audio port, and the secondary audio input port and the secondary audio output port may be combined into a secondary audio port. In one or more embodiments, the primary audio port may be configured so that the primary audio port may receive the first audio signal from the subsequent control device, and the primary audio port may be configured so that the primary audio output port may be able to transmit the third audio signal to the subsequent control device. In one or more embodiments, the secondary audio port may be configured so that the secondary audio port may receive the second audio signal from the preceding control device, and the secondary audio port may be configured so that the secondary audio output port may be able to transmit the fourth audio signal to the preceding control device.

In one or more embodiments, the primary audio port of the control device may be coupled to the secondary audio port of the subsequent control device, and the secondary audio port of the control device may be coupled to the primary audio port of preceding control device.

Each audio signal of the plurality of audio signals may include multiple voice signals of users of the control devices.

The interconnection between the control devices via the primary audio input port, secondary audio input port, primary audio output port, and secondary audio output port of each control device may be wired. Furthermore, the primary audio input port, secondary audio input port, primary audio output port, and secondary audio output port of each control device, or the primary audio port or the secondary audio port of each control device may be adapted to receive a phono plug, a jack plug, an USB plug or any other audio plug.

The internal audio mixer may be configured to add at least two incoming audio signals, such as the first audio signal and the second audio signal, into at least a single outgoing audio signal, such as the internal audio signal.

Alternatively, the internal audio mixer may be a more advanced mixer which may be configured to add at least two incoming audio signals, such as the first audio signal and the second audio signal, and applying a sound processing to the combined audio signals so that the outgoing audio signal of the first internal audio mixer, i.e. the internal audio signal, may be processed such that the user of the control device will experience an improved audio signal quality, e.g. the internal audio signal includes limited delays between the voice signals of the other users and an improved audio balance.

The first and second volume controller may be an analog or a digital potentiometer.

A further object of the present disclosure is achieved by a control device for controlling a plurality of audio signals from a plurality of control devices, wherein the control device of the plurality of control devices comprises an audio port configured to receive a local voice signal of a user of the control device, wherein the local voice signal may be extended into a first local voice signal and a second local voice signal. Furthermore, the control device comprises a primary audio input port configured to receive a first audio signal of the plurality of audio signals transmitted by a subsequent control device of the plurality of control devices, wherein the first audio signal comprises a second voice signal of a second user of the subsequent control device, and a secondary audio input port configured to receive a second audio signal of the plurality of audio signals transmitted by a preceding control device of the plurality of control devices, wherein the second audio signal comprises a third voice signal of a third user of the preceding control device. Additionally, the control device comprises a primary audio output port configured to transmit a third audio signal of the plurality of audio signals comprising the first local voice signal and the second audio signal to the subsequent control device, and a secondary audio output port configured to transmit a fourth audio signal of the plurality of audio signals comprising the second local voice signal and the first audio signal to the preceding control device. Furthermore, the control devices comprises an internal audio mixer configured to mix the first audio signal and the second audio signal into an internal audio signal, and where the primary audio input port and the primary audio output port of the control device may be coupled to the secondary audio output port and the secondary audio input port of the subsequent control device, respectively, and wherein the secondary audio input port and the secondary audio output port of the control device may be coupled to the primary audio output port and the primary audio input port of the preceding control device, respectively. Additionally, the control device comprises a first volume controller configured to control the sound level of the first local voice signal and the second local voice signal and a second volume controller configured to control the sound level of the first internal signal and transmit the internal audio signal to the audio port.

An even further object of the present disclosure is achieved by a method for communicating a plurality of audio signals between a plurality of control devices, wherein the method comprising;
- receiving a local voice signal of a user of the control device by an audio port, and extending the local voice signal into a first local voice signal and a second local voice signal,
- receiving a first audio signal of the plurality of audio signals transmitted by a subsequent control device of the plurality of control devices by a primary audio input port, wherein the first audio signal comprises at least a second voice signal of a second user of the subsequent control device,
- receiving a second audio signal of the plurality of audio signals transmitted by a preceding control device of the plurality of control devices by a secondary audio input port, wherein the second audio signal comprises at least a third voice signal of a third user of the preceding control device,
- transmitting a third audio signal of the plurality of audio signals comprising the first local voice signal and the second audio signal to the subsequent control device by a primary audio output port,
- transmitting a fourth audio signal of the plurality of audio signals comprising the second local voice signal and the first audio signal to the preceding control device by a secondary audio output port, and
- mixing the first audio signal and the second audio signal into an internal audio signal by a first internal audio mixer, and
wherein the primary audio input port and the primary audio output port of the control device may be coupled to the secondary audio output port and the secondary audio input port of the subsequent control device, respectively, and wherein the secondary audio input port and the secondary audio output port of the control device may be coupled to the primary audio output port and the primary audio input port of the preceding control device, respectively, and wherein the control device comprises a first volume controller configured to control the sound level of the first local voice signal and the second local voice signal and a second volume controller configured to control the sound level of the internal audio signal and transmit the internal audio signal to the audio port.

The control device may be configured to be coupled to an external audio device, and wherein the control device comprises a second mixer configured to mix an external audio sound transmitted by the external audio device with the internal audio signal, or the second volume controller may be configured to mix the external audio sound with the internal audio signal, and wherein the output of the second mixer or the output of the second volume controller may be transmitted to the audio port.

A further object of the present disclosure is achieved by a communication system for communicating a plurality of audio signals between a plurality of control devices, wherein the plurality of control devices comprises at least a subsequent control device and at least a preceding control device, wherein each control device of the plurality of control devices comprises an audio port configured to receive a local voice signal of a user of the control device, wherein the local voice signal is extended into a first local voice signal and a second local voice signal, a primary audio input port configured to receive a first audio signal of the plurality of audio signals transmitted by the subsequent control device, wherein the first audio signal comprises a second voice signal of a second user of the subsequent control device, a secondary audio input port configured to receive a second audio signal of the plurality of audio signals transmitted by the preceding control device, wherein the second audio signal comprises a third voice signal of a third user of the preceding control device, a primary audio output port configured to transmit a third audio signal of the plurality of audio signals comprising the first local voice signal and the second audio signal to the subsequent control device, a secondary audio output port configured to transmit a fourth audio signal of the plurality of audio signals comprising the second local voice signal and the first audio signal to the preceding control device, and an internal audio mixer configured to mix the first audio signal and the second audio signal into an internal audio signal, and wherein the primary audio input port and the primary audio output port of the control device are coupled to the secondary audio output port and the secondary audio input port of the subsequent control device, respectively, and wherein the secondary audio input port and the secondary audio output port of the control device are coupled to the primary audio output port and the primary audio input port of the preceding control device, respectively.

The control device may comprises a first volume controller configured to control the sound level of the first local voice signal and the second local voice signal and a second volume controller configured to control the sound level of the internal audio signal and transmit the internal audio signal to the audio port.

An even further object of the present disclosure is achieved by a control device for controlling a plurality of audio signals from a plurality of control devices, wherein the control device of the plurality of control devices comprises:
- an audio port configured to receive a local voice signal of a user of the control device, wherein the local voice signal is extended into a first local voice signal and a second local voice signal,
- a primary audio input port configured to receive a first audio signal of the plurality of audio signals transmitted by a subsequent control device of the plurality of control devices, wherein the first audio signal comprises a second voice signal of a second user of the subsequent control device,
- a secondary audio input port configured to receive a second audio signal of the plurality of audio signals transmitted by a preceding control device of the plurality of control devices, wherein the second audio signal comprises a third voice signal of a third user of the preceding control device,
- a primary audio output port configured to transmit a third audio signal of the plurality of audio signals comprising the first local voice signal and the second audio signal to the subsequent control device,
- a secondary audio output port configured to transmit a fourth audio signal of the plurality of audio signals comprising the second local voice signal and the first audio signal to the preceding control device, and
- an internal audio mixer configured to mix the first audio signal and the second audio signal into an internal audio signal, and
wherein the primary audio input port and the primary audio output port of the control device are coupled to the secondary audio output port and the secondary audio input port of the subsequent control device, respectively, and wherein the secondary audio input port and the secondary audio output port of the control device are coupled to the primary audio output port and the primary audio input port of the preceding control device, respectively.

The control device may comprise a first volume controller configured to control the sound level of the first local voice signal and the second local voice signal and a second volume controller configured to control the sound level of the first internal signal and transmit the internal audio signal to the audio port.

The control device may comprise a surround sound interface configured to be wired.

The respective control devices of the communication system may be further interconnected.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
Figs. 1A - 1B, show different examples of the control device with and without volume controllers
Figs. 2A - 2C show different examples of the control device,
Figs. 3A - 3B, show different examples of the communication system,
Fig. 4, shows an example of an embodiment of the communication system,
Fig. 5, shows a flow diagram of the method for communicating a plurality of audio signals between a plurality of control devices.

### DETAILED DESCRIPTION

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include microprocessors, microcontrollers, digital signal processors (DSPs), field programmable gate arrays (FPGAs), programmable logic devices (PLDs), gated logic, discrete hardware circuits, and other suitable hardware configured to perform the various functionality described throughout this disclosure.

In general, a hearing device includes i) an input unit such as a microphone for receiving an acoustic signal from a user's surroundings and/or the user's own voice and providing a corresponding input audio signal, and/or ii) a receiving unit for electronically receiving an input audio signal. The hearing device further includes a signal processing unit for processing the input audio signal and an output unit for providing an audible signal to the user in dependence on the processed audio signal.

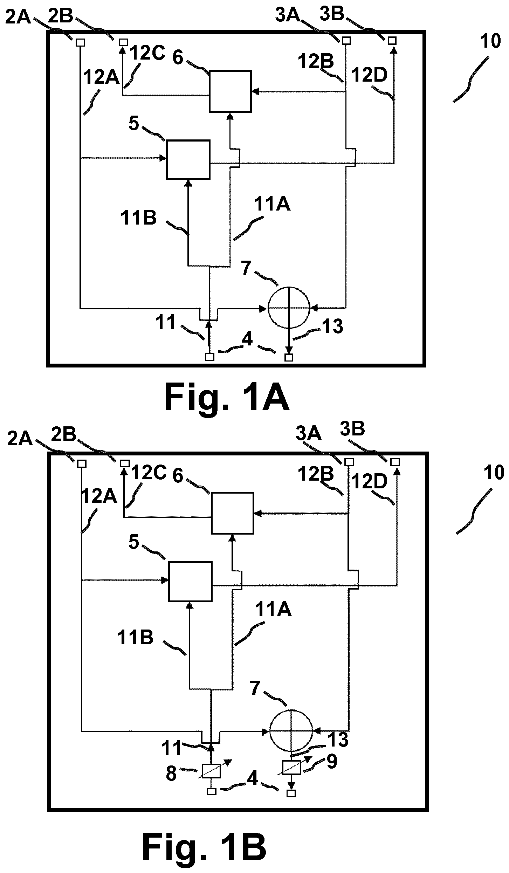

Figs. 1A and 1B show different examples of the control device 10 with and without volume controllers (8, 9). Fig. 1A shows the control device 10 which comprises an audio port 4 configured to receive a local voice signal 11 of a user of the control device 10, wherein the local voice signal 11 is extended into a first local voice signal 11A and a second local voice signal 11B. The control device 10 may receive via a primary audio input port 2A a first audio signal 12A of the plurality of audio signals transmitted by a subsequent control device (not shown in Fig. 1A and 1B), wherein the first audio signal 12A comprises a second voice signal of a second user of the subsequent control device. If the subsequent control device is connected to other control devices, the first audio signal 12A may comprise multiple voice signals of other users of the other control devices. Furthermore, the control device 10 may receive via a secondary audio input port a second audio signal 12B of the plurality of audio signals transmitted by a preceding control device (not shown in Fig. 1A and 1B), wherein the second audio signal 12B comprises a third voice signal of a third user of the preceding control device. If the preceding control device is connected to other control devices, the second audio signal 12B may comprise multiple voice signals of other users of the other control devices. The control device 10 is further configured to transmit via a primary audio output port 2B a third audio signal 12C of the plurality of audio signals comprising the first local voice signal 11A and the second audio signal 12B to the subsequent control device. In this present example, the first local voice signal 11A is combined 6 with the second audio signal 12B via an audio mixer 6. The control device 10 is further configured to transmit via a secondary audio output port 3B a fourth audio signal 12D of the plurality of audio signals comprising the second local voice signal 11B and the first audio signal 12A to the preceding control device 10. In this present example, the second local voice signal 11B is combined 5 with the second audio signal 12B via an audio mixer 5. Additionally, the control device 10 comprises an internal audio mixer 7 configured to mix the first audio signal and the second audio signal into an internal audio signal 13. The internal audio signal 13 is transmitted to the audio port 4.

Fig. 1B shows a similar control device as disclosed in Fig. 1A. Additionally, the control device 10 comprises a first volume controller 8 configured to control the sound level of the first local voice signal 11A and the second local voice signal 11B and a second volume controller 9 configured to control the sound level of the internal audio signal 13 and transmit the internal audio signal to the audio port 4.

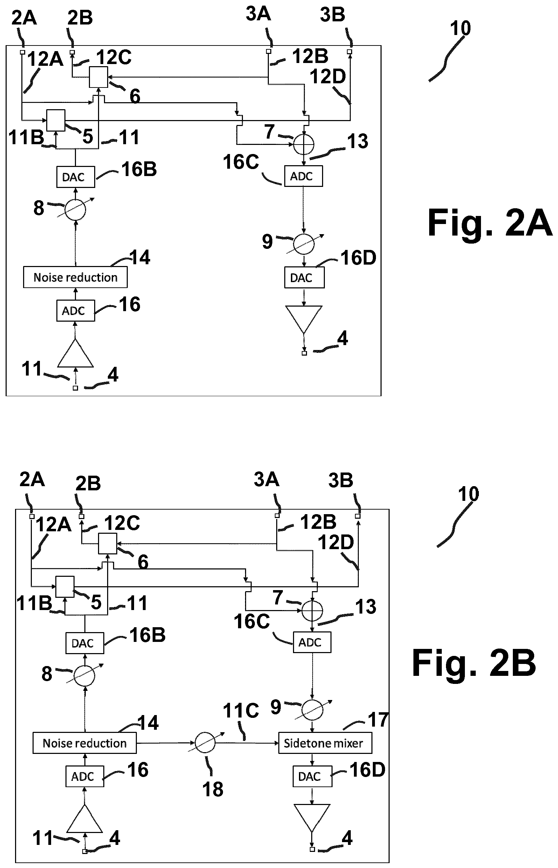

Fig. 2A - 2C show different example of the control device 10. Fig. 2A shows the control device disclosed in Fig. 1B including additional components which are optional. By including signal processing component, such as a noise reduction component 14 results in an improved signal-to-noise ratio of the local voice signal 11, i.e. the first local voice signal 11A and the second local voice signal 11B, and thereby, the quality of the local voice signal (11A or 11B) received by the other control devices may be improved even more. The way the control device 10 is configured and the way the control device 10 communicates with other control devices of the plurality of control devices results in a delay of the local voice signal 11 which is not noticeable for the users of the other control devices. Since the delay is so small the additional delay which may be caused by the noise reduction component 14 will not result in a total delay of the local voice signal 11 which is noticeable for the users of the other control devices.

The sound level of the first local voice signal 11A and the second local voice signal 11B is controlled by the first volume controller 8.

Additionally, an analog-to-digital converter 16A receives the local voice signal 11 in analog domain and converts the local voice signal 11 into digital domain before the local voice signal 11 is signal processed in the noise reduction component 14. A digital-to-analog converter 16B converts the local voice signal 11 in digital domain into analog domain before or after the local voice signal 11 is extended.

The sound level of the internal voice signal 13 is controlled by the second volume controller 9.

The internal audio signal 13 which is converted from analog domain to digital domain by the analog-to-digital converter 16C is converted back to analog domain by the digital-to-analog converter 16D.

Fig. 2B shows a similar control device 10 as disclosed in Fig. 2A with additional features, such as a sidetone mixer 17 which in this particular example is configured to mix a third local voice signal 11C extended from the local voice signal 11 with the internal audio signal 13 in digital domain. Furthermore, the control device 11 comprises a third volume controller 18 which is configured to control the sound level of the third local voice signal 11C.

The internal audio signal 13 which is converted from analog domain to digital domain by the analog-to-digital converter 16C is converted back to analog domain by the digital-to-analog converter 16D.

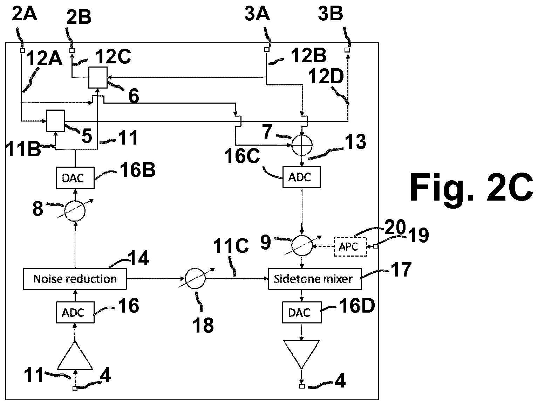

Fig. 2C shows a similar control device as disclosed in Fig 2B with additional features, such as an external audio port 19 configured to receive an external audio signal which does not comprise voice signals from the users of the control devices but which may comprise gaming sounds from a video game played on an external gaming device, such as a computer, gaming PC, a gaming console, a smartphone or a tablet. The external audio port 19 may be configured to receive the external audio signal wirelessly or wired from the external gaming device. The external audio signal may be processed by an audio processing circuitry 20 which may comprise Analog-to-digital converting. The external audio signal may be mixed in the second volume controller 9 with the internal audio signal 13.

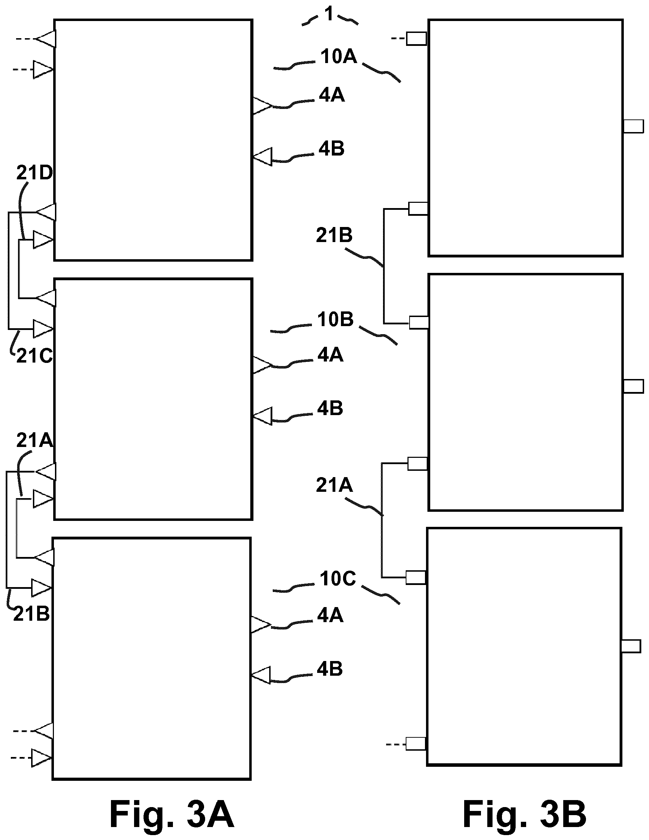

Fig. 3A and 3B show different examples of the communication system 1, wherein the communication system 1 may comprise a plurality of control devices (10A, 10B, 10C). For example, the control device 10 may be the control device 10B and the subsequent control device 10C and the preceding control device 10A. Between the control devices (10A, 10B, 10C).

Each control device (10A, 10B, 10C) may comprise line transformer connected to both primary audio input and output port (3A, 3B) or to secondary audio input and output port (2A, 2B). The line transformer has to be connected similarly in all control devices of the communication system 1. The line transformer is used for eliminating ground loop noise which is generated by having the control devices wired interconnected and connected to the same power supply network.

In Fig. 3A the control devices are interconnected with two wires. Between the control device 10B and the subsequent control device 10C a first wire 21A is connecting the primary audio input port 2A of the control device 10B with the secondary audio output port 3B of the subsequent control device 10C, and a second wire 21B is connecting the primary audio output port 2B of the control device 10B with the secondary audio input port 3A of the subsequence control device 10C. Additionally, a third wire 21C is connecting the secondary audio input port 3A of the control device 10B with the primary audio output port 2B of the preceding control device 10A, and a fourth wire 21D is connecting the secondary audio output port 3B of the control device 10B with the primary audio input port 2A of the preceding control device 10A.

It is implicitly known that a wired connection both has a conductor wired part and a ground wired part.

In one or more embodiments, the preceding control device 10A and the subsequent control device 10C may be connected to other control devices in the same way as they are connected with the control device 10B.

The audio port is in this particular example divided into separate sub audio ports, i.e. a first audio port 4A for receiving the local voice signal 11 from a hearing device and a second audio port 4B for transmitting the internal audio signal 13 mixed or unmixed into the hearing device (the hearing device is not shown in Fig. 3A).

Fig. 3B the control devices are interconnected by a single wire. Between the control device 10B and the subsequent control device 10C a first wire is connecting both the primary audio input and output port of the control device 10B with the secondary audio output and input port of the subsequent control device 10C, respectively. Between the control device 10B and the preceding control device 10A a second wire is connecting both the secondary input and output port of the control device 10B with the primary audio output and input port of the preceding control device 10C.

The audio port is in this particular example a single port configured to receive the local voice signal 11 from a hearing device, and to transmit the internal audio signal 13 mixed or unmixed into the hearing device (the hearing device is not shown in Fig. 3A).

The control devices disclosed in Fig. 3A and 3B may be similar to the control device 10 disclosed in Fig. 1A, 1B, 2A, 2B and 2C.

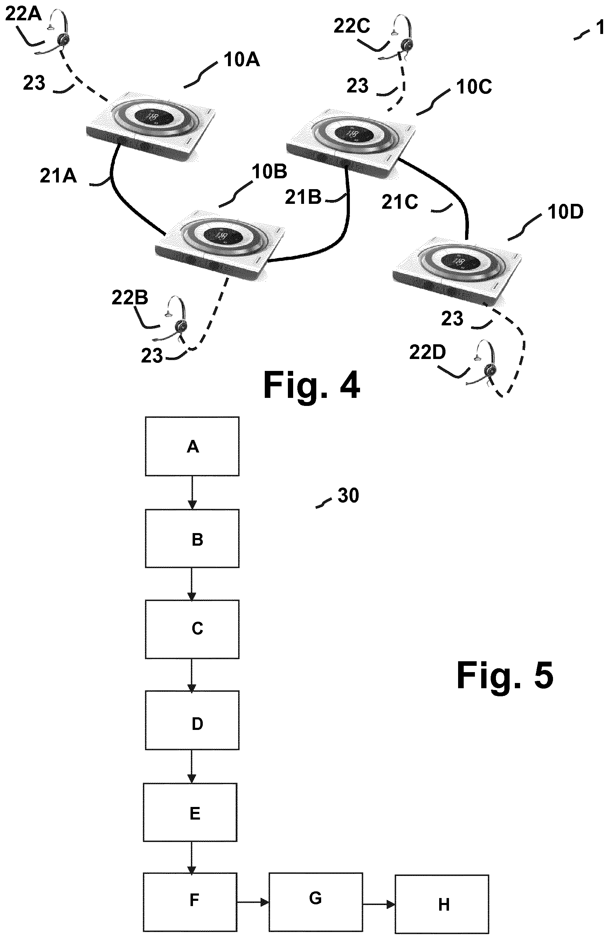

Fig. 4 shows the communication system including multiple control devices (10A, 10B, 10C, 10D). In this particular example the communication system comprises four control devices (10A, 10B, 10C, 10D) wired interconnected to each other by a single wire (21A, 21B, 21C) between each control devices except between the two control devices (10A and 10D). Furthermore, each control device (10A, 10B, 10C, 10D) is coupled 23 to a respective headset (22A, 22B, 22C, 22D) either wirelessly or wired.

Additionally, Fig. 4 shows a gaming situation where each gamer has a control device and a headset connected to the control device. Each control device may furthermore be connected to a gaming device (not shown in Fig. 4). The user may now be able to chat to each other via the control devices and the respective headsets.

Fig. 5 shows a flow diagram of the method 30 for communicating a plurality of audio signals between a plurality of control devices. The method comprising;
Step A: receiving a local voice signal 11 of a user of the control device (10, 10B) by an audio port 4, and extending the local voice signal 11 into a first local voice signal 11A and a second local voice signal 11B,
Step B: receiving a first audio signal 12A of the plurality of audio signals transmitted by a subsequent control device (10, 10C) of the plurality of control devices by a primary audio input port 2A, wherein the first audio signal 12A comprises at least a second voice signal of a second user of the subsequent control device (10,10C). In another example the first audio signal 12A may comprise one or more voice signals of other control devices,
Step C: receiving a second audio signal 12B of the plurality of audio signals transmitted by a preceding control device (10, 10A) of the plurality of control devices by a secondary audio input port 3A, wherein the second audio signal 12B comprises a third voice signal of a third user of the preceding control device (10,10A). In another example the second audio signal 12B may comprise one or more voice signals of other control devices,
Step D: transmitting a third audio signal 12C of the plurality of audio signals comprising the first local voice signal 11A and the second audio signal 12B to the subsequent control device (10,10C) by a primary audio output port 2B,
Step E: transmitting a fourth audio signal 12D of the plurality of audio signals comprising the second local voice signal 11B and the first audio signal 12A to the preceding control device (10, 10A) by a secondary audio output port 3B, and
Step F: mixing the first audio signal 12A and the second audio signal 12B into an internal audio signal 13 by an internal audio mixer 7, and
Step G: arranging the control devices so that the primary audio input port 2A and the primary audio output port 2B of the control device (10, 10B) are coupled to the secondary audio output port 3B and the secondary audio input port 3A of the subsequent control device (10, 10C), respectively, and wherein the secondary audio input port 3A and the secondary audio output port 3B of the control device are coupled to the primary audio output port 2B and the primary audio input port 2A of the preceding control device (10, 10A), respectively, and
Step H: controlling the sound level of the first local voice signal 11A and the second local voice signal 11B by a first volume controller 8, and controlling the sound level of the internal audio signal 13 by a second volume controller 9. The second volume controller 9 is further configured to transmit the internal audio signal 13 to the audio port 4.

Steps from A to H in Fig. 5 may not be executed in the order shown in Fig. 5 and described above. The steps from A to H may be executed in a different order than shown in Fig. 5. For example step G may be performed before step A.

| | |
|---|---|
| 1 | Communication system |
| 2A | Primary audio input port |
| 2B | Primary audio output port |
| 3A | Secondary audio input port |
| 3B | Secondary audio output port |
| 4 | Audio port |
| 4A | First audio port |
| 4B | Second audio port |
| 5 | First combiner |
| 6 | Second combiner |
| 7 | Interal audio mixer |
| 8 | First volume controller |
| 9 | Second volume controller |
| 10 | Control device |
| 10A | First control device, e.g. the preceding control device |
| 10B | Second control device, e.g. the control device |
| 10C | Third control device, e.g. the subsequent control device |
| 10D | Fourth control device |
| 11 | Local voice signal |
| 11A | First local voice signal |
| 11B | Second local voice signal |
| 11C | Third local voice signal |
| 12A | First audio signal |
| 12B | Second audio signal |
| 12C | Third audio signal |
| 12D | Fourth audio signal |
| 13 | Internal audio signal |
| 14 | Noise reduction component |
| 16A | Analog-to-Digital converter |
| 16B | Digital-to-Analog converter |
| 17 | Sidetone mixer |
| 18 | Third volume controller |
| 19 | External audio port |
| 20 | Audio processing circuitry |
| 21A | First wire |
| 21B | Second wire |
| 21C | Third wire |
| 21D | Fourth wire |
| 22 | Headset |
| 23 | Coupling between a control device and a headset |
| 30 | Method for communicating a plurality of audio signals between a plurality of control devices. |

## Claims

1. A communication system (1) for communicating a plurality of audio signals between a plurality of control devices (10, 10A, 10B, 10C, 10D), wherein the plurality of control devices comprises at least a subsequent control device and at least a preceding control device, wherein each control device of the plurality of control devices comprises;
- an audio port (4, 4A, 4B) configured to receive a local voice signal (11) of a user of the control device, wherein the local voice signal is extended into a first local voice signal (11A) and a second local voice signal (11B),
- a primary audio input port (2A) configured to receive a first audio signal (12A) of the plurality of audio signals transmitted by the subsequent control device, wherein the first audio signal comprises a second voice signal of a second user of the subsequent control device,
- a secondary audio input port (3A) configured to receive a second audio signal (12B) of the plurality of audio signals transmitted by the preceding control device, wherein the second audio signal comprises a third voice signal of a third user of the preceding control device,
- a primary audio output port (2B) configured to transmit a third audio signal of the plurality of audio signals comprising the first local voice signal (11A) and the second audio signal to the subsequent control device,
- a secondary audio output port (3B) configured to transmit a fourth audio signal of the plurality of audio signals comprising the second local voice signal (11B) and the first audio signal to the preceding control device, and
- an internal audio mixer configured to mix the first audio signal and the second audio signal into an internal audio signal, and
wherein the primary audio input port (2A) and the primary audio output port (2B) of the control device (10, 10A, 10B, 10C, 10D) are coupled to the secondary audio output port (3B) and the secondary audio input port (3A) of the subsequent control device, respectively, and wherein the secondary audio input port and the secondary audio output port of the control device are coupled to the primary audio output port and the primary audio input port of the preceding control device, respectively, and wherein the control device comprises a first volume controller (8) configured to control the sound level of the first local voice signal (11A) and the second local voice signal (11B) and a second volume controller (9) configured to control the sound level of the internal audio signal (13) and transmit the internal audio signal to the audio port (4, 4A, 4B).

2. A communication system (1) according to claim 1, wherein the plurality of control devices (10, 10A, 10B, 10C, 10D) are coupled to each other in an open communication loop.

3. A communication system (1) according to any of the previous claims, wherein the local voice signal (11) is extended into a third local voice signal (11C), and wherein the control device (10, 10A, 10B, 10C, 10D) comprises a third volume controller (18) configured to control the sound level of the third local voice signal and transmit the third local voice signal to the audio port (4, 4A, 4B).

4. A communication system (1) according to claim 3, wherein the control device (10, 10A, 10B, 10C, 10D) is configured to combine the output of the second volume controller (9) with the output of the third volume controller (18) generating a combined sound output signal and transmit the combined sound output signal to the audio port (4, 4A, 4B).

5. A communication system (1) according to any of the previous claims, wherein the control device (10, 10A, 10B, 10C, 10D) is configured to be coupled wirelessly or wired via the audio port (4, 4A, 4B) to a hearing device (22, 22A, 22B, 22C, 22D), such as a headset or a headphone.

6. A communication system (1) according to any of the previous claims, where in a use situation the first audio signal (12A) and the second audio signal (12B) comprise one or more voice signals of other users of other control devices of the plurality of control devices.

7. A communication system (1) according to any of the previous claims, wherein the control device (10, 10A, 10B, 10C, 10D) is configured to be coupled to an external audio device, and wherein the control device comprises a second mixer configured to mix an external audio sound, transmitted by the external audio device, with the internal audio signal (13), or the second volume controller (9) is configured to mix the external audio sound with the internal audio signal, and wherein the output of the second mixer or the output of the second volume controller is transmitted to the audio port (4, 4A, 4B).

8. A control device (10, 10A, 10B, 10C, 10D) for controlling a plurality of audio signals from a plurality of control devices, wherein the control device of the plurality of control devices comprises:
- an audio port (4, 4A, 4B) configured to receive a local voice signal (11) of a user of the control device (10, 10B), wherein the local voice signal is extended into a first local voice signal (11A) and a second local voice signal (11B),
- a primary audio input port (2A) configured to receive a first audio signal (12A) of the plurality of audio signals transmitted by a subsequent control device (10, 10C) of the plurality of control devices, wherein the first audio signal comprises a second voice signal of a second user of the subsequent control device,
- a secondary audio input port (3A) configured to receive a second audio signal (12B) of the plurality of audio signals transmitted by a preceding control device (10, 10A) of the plurality of control devices, wherein the second audio signal comprises a third voice signal of a third user of the preceding control device (10, 10A),
- a primary audio output port (2B) configured to transmit a third audio signal of the plurality of audio signals comprising the first local voice signal (11A) and the second audio signal (12B) to the subsequent control device (10, 10C),
- a secondary audio output port (3B) configured to transmit a fourth audio signal (12D) of the plurality of audio signals comprising the second local voice signal (11B) and the first audio signal (12A) to the preceding control device (10, 10A), and
- an internal audio mixer (7) configured to mix the first audio signal (12A) and the second audio signal (12B) into an internal audio signal (13), and
wherein the primary audio input port (2A) and the primary audio output port (2B) of the control device (10, 10B) are coupled to the secondary audio output port (3B) and the secondary audio input port (3A) of the subsequent control device (10, 10C), respectively, and wherein the secondary audio input port (3A) and the secondary audio output port (3B) of the control device (10, 10B) are coupled to the primary audio output port (2B) and the primary audio input port (2A) of the preceding control device (10, 10A), respectively, and wherein the control device (10, 10B) comprises a first volume controller (8) configured to control the sound level of the first local voice signal (11A) and the second local voice signal (11B) and a second volume controller (9) configured to control the sound level of the first internal signal and transmit the internal audio signal (13) to the audio port (4, 4A, 4B).

9. A control device (10, 10A, 10B, 10C, 10D) according to claim 8, wherein the local voice signal (11) is extended into a third local voice signal (11C), and wherein the control device comprises a third volume controller (18) configured to control the sound level of the third local voice signal and transmit the third local voice signal to the audio port (4, 4A, 4B).

10. A control device (10, 10A, 10B, 10C, 10D) according to claim 9, wherein the control device is configured to combine the output of the second volume controller (9) with the output of the third volume controller (18) generating a combined sound output signal and transmit the combined sound output signal to the audio port (4, 4A, 4B).

11. A control device (10, 10A, 10B, 10C, 10D) according to claims 8 to 10, wherein the control device is configured to be coupled wirelessly or wired via the audio port (4, 4A, 4B) to a hearing device (22, 22A, 22B, 22C, 22D), such as a headset or a headphone.

12. A control device (10, 10A, 10B, 10C, 10D) according to claims 8 to 11, wherein the control device is configured to be coupled to an external audio device, and wherein the control device comprises a second mixer configured to mix an external audio sound, transmitted by the external audio device, with the internal audio signal (13), or the second volume controller (9) is configured to mix the external audio sound with the internal audio signal, and wherein the output of the second mixer or the output of the second volume controller is transmitted to the audio port (4, 4A, 4B).

13. A method (30) for communicating a plurality of audio signals between a plurality of control devices (10, 10A, 10B, 10C, 10D), wherein the method comprising;
- receiving a local voice signal (11) of a user of the control device (10, 10A, 10B, 10C, 10D) by an audio port (4), and extending the local voice signal into a first local voice signal (11A) and a second local voice signal (11B),
- receiving a first audio signal (12A) of the plurality of audio signals transmitted by a subsequent control device (10, 10C) of the plurality of control devices by a primary audio input port (2A), wherein the first audio signal comprises at least a second voice signal of a second user of the subsequent control device (10, 10C),
- receiving a second audio signal (12B) of the plurality of audio signals transmitted by a preceding control device (10, 10A) of the plurality of control devices by a secondary audio input port (3A), wherein the second audio signal comprises at least a third voice signal of a third user of the preceding control device (10, 10A),
- transmitting a third audio signal (12C) of the plurality of audio signals comprising the first local voice signal (11A) and the second audio signal to the subsequent control device (10, 10C) by a primary audio output port (2B),
- transmitting a fourth audio signal (12D) of the plurality of audio signals comprising the second local voice signal (11B) and the first audio signal to the preceding control device (10, 10A) by a secondary audio output port (3B), and
- mixing the first audio signal (12A) and the second audio signal (12B) into an internal audio signal (13) by an internal audio mixer (7), and
wherein the primary audio input port (2A) and the primary audio output port (2B) of the control device are coupled to the secondary audio output port (3B) and the secondary audio input port (3A) of the subsequent control device (10, 10C), respectively, and wherein the secondary audio input port (3A) and the secondary audio output port (3B) of the control device are coupled to the primary audio output port (2B) and the primary audio input port (2A) of the preceding control device (10, 10A), respectively, and wherein the control device comprises a first volume controller (8) configured to control the sound level of the first local voice signal (11A) and the second local voice signal (11B) and a second volume controller (9) configured to control the sound level of the internal audio signal (13) and transmit the internal audio signal to the audio port (4, 4A, 4B).

14. A method (30) according to claim 13, wherein the plurality of control devices (10, 10A, 10B, 10C, 10D) are coupled to each other in an open communication.

15. A method (30) according to claim 13, wherein the control device (10, 10A, 10B, 10C, 10D) is configured to be coupled wirelessly or wired via the audio port (4, 4A, 4B) to a hearing device (22, 22A, 22B, 22C, 22D), such as a headset or a headphone.

## Patentansprüche

1. Kommunikationssystem (1) zum Übermitteln einer Vielzahl von Audiosignalen zwischen einer Vielzahl von Steuerungsvorrichtungen (10, 10A, 10B, 10C, 10D), wobei die Vielzahl von Steuerungsvorrichtungen zumindest eine nachgeschaltete Steuerungsvorrichtung und zumindest eine vorgeschaltete Steuerungsvorrichtung aufweisen, wobei jede Steuerungsvorrichtung der Vielzahl von Steuerungsvorrichtungen aufweist;
- einen Audioanschluss (4, 4A, 4B), der dazu eingerichtet ist, um ein lokales Sprachsignal (11) eines Nutzers der Steuerungsvorrichtung zu empfangen, wobei das lokale Sprachsignal auf ein erstes lokales Sprachsignal (11A) und ein zweites lokales Sprachsignal (11B) ausgeweitet wird,
- einen primäreren Audioeingangsanschluss (2A), der dazu eingerichtet ist, um ein, durch die nachgeschaltete Steuerungsvorrichtung übertragenes, erstes Audiosignal (12A) der Vielzahl von Audiosignalen zu empfangen, wobei das erste Audiosignal ein zweites Sprachsignal eines zweiten Nutzers der nachgeschalteten Steuerungsvorrichtung aufweist,
- einen sekundären Audioeingangsanschluss (3A), der dazu eingerichtet ist, um ein, durch die vorgeschaltete Steuerungsvorrichtung übertragenes, zweites Audiosignal (12B) der Vielzahl von Audiosignalen zu empfangen, wobei das zweite Audiosignal ein drittes Sprachsignal eines dritten Nutzers der vorgeschalteten Steuerungsvorrichtung aufweist,
- einen primären Audioausgangsanschluss (2B), der dazu eingerichtet ist, um ein, das erste lokale Sprachsignal (11A) und das zweite Audiosignal aufweisendes, drittes Audiosignal der Vielzahl von Audiosignalen zu der nachgeschalteten Steuerungsvorrichtung zu übertragen,
- einen sekundären Audioausgangsport (3B), der dazu eingerichtet ist, um ein, das zweite lokale Sprachsignal (11B) und das erste Audiosignal aufweisendes, viertes Audiosignal der Vielzahl von Audiosignalen zu der vorgeschalteten Steuerungsvorrichtung zu übertragen, und
- einen internen Audiomischer, der dazu eingerichtet ist, um das erste Audiosignal und das zweite Audiosignal zu einem internen Audiosignal zu mischen, und
wobei der primäre Audioeingangsanschluss (2A) und der primäre Audioausgangsanschluss (2B) der Steuerungsvorrichtung (10, 10A, 10B, 10C, 10D) entsprechend an den sekundären Audioausgangsanschluss (3B) und den sekundären Audioeingangsanschluss (3A) der nachgeschalteten Steuerungsvorrichtung gekoppelt sind, und wobei der sekundäre Audioeingangsanschluss und der sekundäre Audioausgangsanschluss der Steuerungsvorrichtung entsprechend an den primären Audioausgangsanschluss und den primären Audioeingangsanschluss der vorgeschalteten Steuerungsvorrichtung gekoppelt sind, und wobei die Steuerungsvorrichtung eine erste Lautstärke-Steuerungseinrichtung (8) aufweist, die dazu eingerichtet ist, um die Lautstärke des ersten lokalen Sprachsignals (11A) und des zweiten lokalen Sprachsignals (11B) zu steuern, und eine zweite Lautstärke-Steuerungseinrichtung (9), die dazu eingerichtet ist, um die Lautstärke des internen Audiosignals (13) zu steuern und das interne Audiosignal an den Audioanschluss (4, 4A, 4B) zu übertragen.

2. Kommunikationssystem (1) gemäß Anspruch 1, wobei die Vielzahl von Steuerungsvorrichtungen (10, 10A, 10B, 10C, 10D) in einer offenen Kommunikationsschleife miteinander gekoppelt sind.

3. Kommunikationssystem (1) gemäß einem der vorhergehenden Ansprüche, wobei das lokale Sprachsignal (11) in ein drittes lokales Sprachsignal (11C) ausgeweitet wird, und wobei die Steuerungsvorrichtung (10, 10A, 10B, 10C, 10D) eine dritte Lautstärke-Steuerungseinrichtung (18) aufweist, die dazu eingerichtet ist, um die Laustärke des dritten lokalen Sprachsignals zu steuern und um das dritte lokale Sprachsignal zu dem Audioanschluss (4, 4A, 4B) zu übertragen.

4. Kommunikationssystem (1) gemäß Anspruch 3, wobei die Steuerungsvorrichtung (10, 10A, 10B, 10C, 10D) dazu eingerichtet ist, um den Ausgang der zweiten Lautstärke-Steuerungseinrichtung (9) mit dem Ausgang der dritten Lautstärke-Steuerungseinrichtung (18) zu kombinieren, wobei ein kombiniertes Audioausgangssignal generiert wird, und um das kombinierte Audioausgangssignal zum Audioausgang (4, 4A, 4B) zu übertragen.

5. Kommunikationssystem (1) gemäß einem der vorhergehenden Ansprüche, wobei die Steuerungsvorrichtung (10, 10A, 10B, 10C, 10D) dazu eingerichtet ist, um drahtlos oder per Draht über den Audioausgang (4, 4A, 4B) an eine Hörvorrichtung (22, 22A, 22B, 22C, 22D), wie ein Kopfsprechhörer oder ein Kopfhörer, gekoppelt zu sein.

6. Kommunikationssystem (1) gemäß einem der vorhergehenden Ansprüche, wobei das erste Audiosignal (12A) und das zweite Audiosignal (12B) in einem Anwendungsfall ein oder mehrere Sprachsignale aufweisen, von anderen Nutzern anderer Steuerungsvorrichtungen von der Vielzahl von Steuerungsvorrichtungen.

7. Kommunikationssystem (1) gemäß einem der vorhergehenden Ansprüche, wobei die Steuerungsvorrichtung (10, 10A, 10B, 10C, 10D) dazu eingerichtet ist, um an eine externe Audiovorrichtung gekoppelt zu sein, und wobei die Steuerungsvorrichtung einen zweiten Mischer aufweist, der dazu eingerichtet ist, um einen externen, durch die externe Audiovorrichtung übertragenen, Audioton mit dem internen Audiosignal (13) zu mischen, oder die zweite Lautstärke-Steuerungseinrichtung (9) dazu eingerichtet ist, um den externen Audioton mit dem internen Audiosignal zu mischen, und wobei die Ausgabe des zweiten Mischers oder die Ausgabe der zweiten Lautstärke-Steuerungseinrichtung zum Audioanschluss (4, 4A, 4B) übertragen wird.

8. Steuerungsvorrichtung (10, 10A, 10B, 10C, 10D) zum Steuern einer Vielzahl von Audiosignalen aus einer Vielzahl von Steuerungsvorrichtungen, wobei die Steuerungsvorrichtung der Vielzahl von Steuerungsvorrichtungen aufweist:
- einen Audioanschluss (4, 4A, 4B), der dazu eingerichtet ist, um ein lokales Sprachsignal (11) eines Nutzers der Steuerungsvorrichtung (10, 10B) zu empfangen, wobei das lokale Sprachsignal in ein erstes lokales Sprachsignal (11A) und ein zweites lokales Sprachsignal (11B) ausgeweitet wird,
- ein primärer Audioeingangsanschluss (2A), der dazu eingerichtet ist, um ein, durch eine nachgeschaltete Steuerungsvorrichtung (10, 10C) der Vielzahl von Steuerungsvorrichtungen übertragenes, erstes Audiosignal (12A) der Vielzahl von Audiosignalen zu empfangen, wobei das erste Audiosignal ein zweites Sprachsignal eines zweiten Nutzers der nachgeschalteten Steuerungsvorrichtung aufweist,
- ein sekundärer Audioeingangsanschluss (3A), der dazu eingerichtet ist, um ein, durch eine vorgeschaltete Steuerungsvorrichtung (10, 10A) der Vielzahl von Steuerungsvorrichtungen übertragenes, zweites Audiosignal (12B) der Vielzahl von Audiosignalen zu empfangen, wobei das zweite Audiosignal ein drittes Sprachsignal eines dritten Nutzers der vorgeschalteten Steuerungsvorrichtung (10, 10A) aufweist,
- einen primären Audioausgangsanschluss (2B), der dazu eingerichtet ist, um ein, das erste lokale Sprachsignal (11A) und das zweite Audiosignal (12B) aufweisendes, drittes Audiosignal der Vielzahl von Audiosignalen an die nachgeschaltete Steuerungsvorrichtung (10, 10C) zu übertragen,
- einen sekundären Audioausgangsanschluss (3B), der dazu eingerichtet ist, um ein, das zweite lokale Sprachsignal (11B) und das erste Audiosignal (12A) aufweisendes, viertes Audiosignal (12D) der Vielzahl von Audiosignalen an die vorgeschaltete Steuerungsvorrichtung (10, 10A) zu übertragen, und
- einen internen Audiomischer (7), der dazu eingerichtet ist, um das erste Audiosignal (12A) und das zweite Audiosignal (12B) zu einem internen Audiosignal zu mischen (13), und
wobei der primäre Audioeingangsanschluss (2A) und der primäre Audioausgangsanschluss (2B) der Steuerungsvorrichtung (10, 10B) entsprechend an den sekundären Audioausgangsanschluss (3B) und den sekundären Audioeingangsanschluss (3A) der nachgeschalteten Steuerungsvorrichtung gekoppelt sind, und wobei der sekundäre Audioeingangsanschluss (3A) und der sekundäre Audioausgangsanschluss (3B) der Steuerungsvorrichtung (10, 10B) entsprechend an den primären Audioausgangsanschluss (2B) und den primären Audioeingangsanschluss (2A) der vorgeschalteten Steuerungsvorrichtung gekoppelt sind, und wobei die Steuerungsvorrichtung (10, 10B) eine erste Lautstärke-Steuerungseinrichtung (8) aufweist, die dazu eingerichtet ist, um die Lautstärke des ersten lokalen Sprachsignals (11A) und des zweiten lokalen Sprachsignals (11B) zu steuern und eine zweite Lautstärke-Steuerungseinrichtung (9), die dazu eingerichtet ist, um die Lautstärke des ersten internen Signals zu steuern und das interne Audiosignal (13) an den Audioanschluss (4, 4A, 4B) zu übertragen.

9. Steuerungsvorrichtung (10, 10A, 10B, 10C, 10D) gemäß Anspruch 8, wobei das lokale Sprachsignal (11) in ein drittes lokales Sprachsignal (11C) ausgeweitet wird, und wobei die Steuerungsvorrichtung eine dritte Lautstärke-Steuerungseinrichtung (18) aufweist, die dazu eingerichtet ist, um die Lautstärke des dritten lokalen Sprachsignals zu steuern und das dritte lokale Sprachsignal an den Audioausgang (4, 4A, 4B) zu übertragen.

10. Steuerungsvorrichtung (10, 10A, 10B, 10C, 10D) gemäß Anspruch 9, wobei die Steuerungsvorrichtung dazu eingerichtet ist, um die Ausgabe der zweiten Lautstärke-Steuerungseinrichtung (9) mit der Ausgabe der dritten Lautstärke-Steuerungseinrichtung (18) zu kombinieren, wobei ein kombiniertes Audioausgangssignal generiert wird und das kombinierte Audioausgangssignal zu dem Audioausgang (4, 4A, 4B) übertragen wird.

11. Steuerungsvorrichtung (10, 10A, 10B, 10C, 10D) gemäß den Ansprüchen 8 bis 10, wobei die Steuerungsvorrichtung dazu eingerichtet ist, um drahtlos oder per Draht über den Audioausgang (4, 4A, 4B) an eine Hörvorrichtung (22, 22A, 22B, 22C, 22D), wie ein Kopfsprechhörer oder ein Kopfhörer, gekoppelt zu sein.

12. Steuerungsvorrichtung (10, 10A, 10B, 10C, 10D) gemäß der Ansprüche 8 bis 11, wobei die Steuerungsvorrichtung dazu eingerichtet ist, um an eine externe Audiovorrichtung gekoppelt zu sein, und wobei die Steuerungsvorrichtung einen zweiten Mischer aufweist, der dazu eingerichtet ist, um einen, durch die externe Audiovorrichtung übertragenen, externen Audioton mit dem internen Audiosignal (13) zu mischen, oder die zweite Lautstärke-Steuerungseinrichtung (9) dazu eingerichtet ist, um den externen Audioton mit dem internen Audiosignal zu mischen, und wobei die Ausgabe des zweiten Mischers oder die Ausgabe der zweiten Lautstärke-Steuerungseinrichtung zu dem Audioausgang (4, 4A, 4B) übertragen wird.

13. Verfahren (30) zum Übermitteln einer Vielzahl von Audiosignalen zwischen einer Vielzahl von Steuerungsvorrichtungen (10, 10A, 10B, 10C, 10D), wobei das Verfahren aufweist;
- Empfangen eines lokalen Sprachsignals (11) eines Nutzers der Steuerungsvorrichtung (10, 10A, 10B, 10C, 10D) durch einen Audioanschluss (4), und Ausweiten des lokalen Sprachsignals in ein erstes lokales Sprachsignal (11A) und ein zweites lokales Sprachsignal (11B),
- Empfangen eines, durch eine nachgeschaltete Steuerungsvorrichtung (10, 10C) der Vielzahl von Steuerungsvorrichtungen übertragenen, ersten Audiosignals (12A) der Vielzahl von Audiosignalen durch einen primären Audioeingangsanschluss (2A), wobei das erste Audiosignal zumindest ein zweites Sprachsignal eines zweiten Nutzers der nachgeschalteten Steuerungsvorrichtung (10, 10C) aufweist,
- Empfangen eines, durch eine vorgeschaltete Steuerungsvorrichtung (10, 10A) der Vielzahl von Steuerungsvorrichtungen übertragenen, zweiten Audiosignals (12B) der Vielzahl von Audiosignalen durch einen sekundären Audioeingangsanschluss (3A), wobei das zweite Audiosignal zumindest ein drittes Sprachsignal eines dritten Nutzers der vorgeschalteten Steuerungsvorrichtung (10, 10A) aufweist,
- Übertragen eines, das erste lokale Sprachsignal (11A) und das zweite Audiosignal aufweisenden, dritten Audiosignals (12C) der Vielzahl von Audiosignalen zu der nachgeschalteten Steuerungsvorrichtung (10, 10C) durch einen primären Audioausgangsanschluss (2B),
- Übertragen eines, das zweite lokale Sprachsignal (11B) und das erste Audiosignal aufweisenden, vierten Audiosignals (12D) der Vielzahl von Audiosignalen zu der vorgeschalteten Steuerungsvorrichtung (10, 10A) durch einen sekundären Audioausgangsanschluss (3B), und
- Mischen des ersten Audiosignals (12A) und des zweiten Audiosignals (12B) zu einem internen Audiosignal (13) durch einen internen Audiomischer (7), und
wobei der primäre Audioeingangsanschluss (2A) und der primäre Audioausgangsanschluss (2B) der Steuerungsvorrichtung entsprechend an den sekundären Audioausgangsanschluss (3B) und den sekundären Audioeingangsanschluss (3A) der nachgeschalteten Steuerungsvorrichtung (10, 10C) gekoppelt werden, und wobei der sekundäre Audioeingangsanschluss (3A) und der sekundäre Audioausgangsanschluss (3B) der Steuerungsvorrichtung entsprechend an den primären Audioausgangsanschluss (2B) und den primären Audioeingangsanschluss (2A) der vorgeschalteten Steuerungsvorrichtung (10, 10A) gekoppelt werden, und wobei die Steuerungsvorrichtung eine erste Lautstärke-Steuerungseinrichtung (8) aufweist, die dazu eingerichtet ist, um die Lautstärke des ersten lokalen Sprachsignals (11A) und des zweiten lokalen Sprachsignals (11B) zu steuern, und eine zweite Lautstärke-Steuerungseinrichtung (9), die dazu eingerichtet ist, um die Lautstärke des internen Audiosignals zu steuern (13) und das interne Audiosignal an den Audioanschluss (4, 4A, 4B) zu übertragen.

14. Verfahren (30) gemäß Anspruch 13, wobei die Vielzahl von Steuerungsvorrichtungen (10, 10A, 10B, 10C, 10D) in einer offenen Kommunikationsschleife miteinander gekoppelt sind.

15. Verfahren (30) gemäß Anspruch 13, wobei die Steuerungsvorrichtung (10, 10A, 10B, 10C, 10D) dazu eingerichtet ist, um drahtlos oder per Draht über den Audioanschluss (4, 4A, 4B) an eine Hörvorrichtung (22, 22A, 22B, 22C, 22D), wie ein Kopfsprechhörer oder ein Kopfhörer, gekoppelt zu werden.

## Revendications

1. Système de communication (1) pour communiquer une pluralité de signaux audio entre une pluralité de dispositifs de commande (10, 10A, 10B, 10C, 10D), où la pluralité de dispositifs de commande comprend au moins un dispositif de commande postérieur et au moins un dispositif de commande antérieur, où chaque dispositif de commande de la pluralité de dispositifs de commande comprend :
- un port audio (4, 4A, 4B) conçu pour recevoir un signal vocal local (11) d'un utilisateur du dispositif de commande, où le signal vocal local est étendu dans un premier signal vocal local (11A) et un deuxième signal vocal local (11B),
- un port d'entrée audio primaire (2A) conçu pour recevoir un premier signal audio (12A) de la pluralité de signaux audio transmis par le dispositif de commande postérieur, où le premier signal audio comprend un deuxième signal vocal d'un deuxième utilisateur du dispositif du commande postérieur,
- un port d'entrée audio secondaire (3A) conçu pour recevoir un deuxième signal audio (12B) de la pluralité de signaux audio transmis par le dispositif de commande antérieur, où le deuxième signal audio comprend un troisième signal vocal d'un troisième utilisateur du dispositif de commande antérieur,
- un port de sortie audio primaire (2B) conçu pour transmettre un troisième signal audio de la pluralité de signaux audio comprenant le premier signal vocal local (11A) et le deuxième signal audio au dispositif de commande postérieur,
- un port de sortie audio secondaire (3B) conçu pour transmettre un quatrième signal audio de la pluralité de signaux audio comprenant le deuxième signal vocal local (11B) et le premier signal audio au dispositif de commande antérieur, et
- un mélangeur audio interne conçu pour mélanger le premier signal audio et le deuxième signal audio en un signal audio interne, et
où le port d'entrée audio primaire (2A) et le port de sortie audio primaire (2B) du dispositif de commande (10, 10A, 10B, 10C, 10D) sont couplés au port de sortie audio secondaire (3B) et au port d'entrée audio secondaire (3A) du dispositif de commande postérieur, respectivement, et où le port d'entrée audio secondaire et le port de sortie audio secondaire du dispositif de commande sont couplés au port de sortie audio primaire et au port d'entrée audio primaire du dispositif de commande antérieur, respectivement, et où le dispositif de commande comprend une première commande de volume (8) conçue pour commander le niveau sonore du premier signal vocal local (11A) et du deuxième signal vocal local (11B) et une deuxième commande de volume (9) conçue pour commander le niveau sonore du signal audio interne (13) et transmettre le signal audio interne au port audio (4, 4A, 4B).

2. Système de communication (1) selon la revendication 1, où, dans la pluralité de dispositifs de commande (10, 10A, 10B, 10C, 10D), ces derniers sont couplés les uns aux autres dans une boucle de communication ouverte.

3. Système de communication (1) selon l'une quelconque des revendications précédentes, où le signal vocal local (11) est étendu dans un troisième signal vocal local (11C), et où le dispositif de commande (10, 10A, 10B, 10C, 10D) comprend une troisième commande de volume (18) conçue pour commander le niveau sonore du troisième signal vocal local et transmettre le troisième signal vocal local au port audio (4, 4A, 4B).

4. Système de communication (1) selon la revendication 3, où le dispositif de commande (10, 10A, 10B, 10C, 10D) est conçu pour combiner la sortie de la deuxième commande de volume (9) avec la sortie de la troisième commande de volume (18), générant un signal sonore de sortie combiné, et transmettre le signal sonore de sortie combiné au port audio (4, 4A, 4B).

5. Système de communication (1) selon l'une quelconque des revendications précédentes, où le dispositif de commande (10, 10A, 10B, 10C, 10D) est conçu pour être couplé sans fil ou avec fil via le port audio (4, 4A, 4B) à un dispositif auditif (22, 22A, 22B, 22C, 22D), tel qu'un casque ou un casque d'écoute.

6. Système de communication (1) selon l'une quelconque des revendications précédentes, où, dans une situation d'utilisation, le premier signal audio (12A) et le deuxième signal audio (12B) comprennent un ou plusieurs signaux vocaux d'autres utilisateurs d'autres dispositifs de commande de la pluralité de dispositifs de commande.

7. Système de communication (1) selon l'une quelconque des revendications précédentes, où le dispositif de commande (10, 10A, 10B, 10C, 10D) est conçu pour être couplé à un dispositif audio externe, et où le dispositif de commande comprend un deuxième mélangeur conçu pour mélanger un son audio externe, transmis par le dispositif audio externe, avec le signal audio interne (13), ou la deuxième commande de volume (9) est conçue pour mélanger le son audio externe avec le signal audio interne, et où la sortie du deuxième mélangeur ou la sortie de la deuxième commande de volume est transmise au port audio (4, 4A, 4B).

8. Dispositif de commande (10, 10A, 10B, 10C, 10D) pour commander une pluralité de signaux audio à partir d'une pluralité de dispositifs de commande, où le dispositif de commande de la pluralité de dispositifs de commande comprend :
- un port audio (4, 4A, 4B) conçu pour recevoir un signal vocal local (11) d'un utilisateur du dispositif de commande (10, 10B), où le signal vocal local est étendu dans un premier signal vocal local (11A) et un deuxième signal vocal local (11B),
- un port d'entrée audio primaire (2A) conçu pour recevoir un premier signal audio (12A) de la pluralité de signaux audio transmis par un dispositif de commande postérieur (10, 10C) de la pluralité de dispositifs de commande, où le premier signal audio comprend un deuxième signal vocal d'un deuxième utilisateur du dispositif de commande postérieur,
- un port d'entrée audio secondaire (3A) conçu pour recevoir un deuxième signal audio (12B) de la pluralité de signaux audio transmis par un dispositif de commande antérieur (10, 10A) de la pluralité de dispositifs de commande, où le deuxième signal audio comprend un troisième signal vocal d'un troisième utilisateur du dispositif de commande antérieur (10, 10A),
- un port de sortie audio primaire (2B) conçu pour transmettre un troisième signal audio de la pluralité de signaux audio comprenant le premier signal vocal local (11A) et le deuxième signal audio (12B) au dispositif de commande postérieur (10, 10C),
- un port de sortie audio secondaire (3B) conçu pour transmettre un quatrième signal audio (12D) de la pluralité de signaux audio comprenant le deuxième signal vocal local (11B) et le premier signal audio (12A) au dispositif de commande antérieur (10, 10A), et
- un mélangeur audio interne (7) conçu pour mélanger le premier signal audio (12A) et le deuxième signal audio (12B) en un signal audio interne (13), et
où le port d'entrée audio primaire (2A) et le port de sortie audio primaire (2B) du dispositif de commande (10, 10B) sont couplés au port de sortie audio secondaire (3B) et au port d'entrée audio secondaire (3A) du dispositif de commande postérieur (10, 10C), respectivement, et où le port d'entrée audio secondaire (3A) et le port de sortie audio secondaire (3B) du dispositif de commande (10, 10B) sont couplés au port de sortie audio primaire (2B) et au port d'entrée audio primaire (2A) du dispositif de commande antérieur (10, 10A), respectivement, et où le dispositif de commande (10, 10B) comprend une première commande de volume (8) conçue pour commander le niveau sonore du premier signal vocal local (11A) et du deuxième signal vocal local (11B) et une deuxième commande de volume (9) conçue pour commander le niveau sonore du premier signal interne et transmettre le signal audio interne (13) au port audio (4, 4A, 4B).

9. Dispositif de commande (10, 10A, 10B, 10C, 10D) selon la revendication 8, où le signal vocal local (11) est étendu dans un troisième signal vocal local (11C), et où le dispositif de commande comprend une troisième commande de volume (18) conçue pour commander le niveau sonore du troisième signal vocal local et transmettre le troisième signal vocal local au port audio (4, 4A, 4B).

10. Dispositif de commande (10, 10A, 10B, 10C, 10D) selon la revendication 9, où le dispositif de commande est conçu pour combiner la sortie de la deuxième commande de volume (9) avec la sortie de la troisième commande de volume (18), générant un signal de sortie sonore combiné, et transmettre le signal de sortie sonore combiné au port audio (4, 4A, 4B).

11. Dispositif de commande (10, 10A, 10B, 10C, 10D) selon les revendications 8 à 10, où le dispositif de commande est conçu pour être couplé sans fil ou avec fil via le port audio (4, 4A, 4B) à un dispositif auditif (22, 22A, 22B, 22C, 22D), tel qu'un casque ou un casque d'écoute.

12. Dispositif de commande (10, 10A, 10B, 10C, 10D) selon les revendications 8 à 11, où le dispositif de commande est conçu pour être couplé à un dispositif audio externe, et où le dispositif de commande comprend un deuxième mélangeur conçu pour mélanger un son audio externe, transmis par le dispositif audio externe, avec le signal audio interne (13), ou la deuxième commande de volume (9) est conçue pour mélanger le son audio externe avec le signal audio interne, et où la sortie du deuxième mélangeur ou la sortie de la deuxième commande de volume est transmise au port audio (4, 4A, 4B).

13. Procédé (30) pour communiquer une pluralité de signaux audio entre une pluralité de dispositifs de commande (10, 10A, 10B, 10C, 10D), où le procédé comprend :
- une réception d'un signal vocal local (11) d'un utilisateur du dispositif de commande (10, 10A, 10B, 10C, 10D) par un port audio (4), et une extension du signal vocal local dans un premier signal vocal local (11A) et un deuxième signal vocal local (11B),
- une réception d'un premier signal audio (12A) de la pluralité de signaux audio transmis par un dispositif de commande postérieur (10, 10C) de la pluralité de dispositifs de commande par un port d'entrée audio primaire (2A), où le premier signal audio comprend au moins un deuxième signal vocal d'un deuxième utilisateur du dispositif de commande postérieur (10, 10C),
- une réception d'un deuxième signal audio (12B) de la pluralité de signaux audio transmis par un dispositif de commande antérieur (10, 10A) de la pluralité de dispositifs de commande par un port d'entrée audio secondaire (3A), où le deuxième signal audio comprend au moins un troisième signal vocal d'un troisième utilisateur du dispositif de commande antérieur (10, 10A),
- une transmission d'un troisième signal audio (12C) de la pluralité de signaux audio comprenant le premier signal vocal local (11A) et le deuxième signal audio au dispositif de commande postérieur (10, 10C) par un port de sortie audio primaire (2B),
- une transmission d'un quatrième signal audio (12D) de la pluralité de signaux audio comprenant le deuxième signal vocal local (11B) et le premier signal audio au dispositif de commande antérieur (10, 10A) par un port de sortie audio secondaire (3B), et
- un mélange du premier signal audio (12A) et du deuxième signal audio (12B) en un signal audio interne (13) par un mélangeur audio interne (7), et
où le port d'entrée audio primaire (2A) et le port de sortie audio primaire (2B) du dispositif de commande sont couplés au port de sortie audio secondaire (3B) et au port d'entrée audio secondaire (3A) du dispositif de commande postérieur (10, 10C), respectivement, et où le port d'entrée audio secondaire (3A) et le port de sortie audio secondaire (3B) du dispositif de commande sont couplés au port de sortie audio primaire (2B) et au port d'entrée audio primaire (2A) du dispositif de commande antérieur (10, 10A), respectivement, et où le dispositif de commande comprend une première commande de volume (8) conçue pour commander le niveau sonore du premier signal vocal local (11A) et du deuxième signal vocal local (11B) et une deuxième commande de volume (9) conçue pour commander le niveau sonore du signal audio interne (13) et transmettre le signal audio interne au port audio (4, 4A, 4B).

14. Procédé (30) selon la revendication 13, où, dans la pluralité de dispositifs de commande (10, 10A, 10B, 10C, 10D), ces derniers sont couplés les uns aux autres dans une communication ouverte.

15. Procédé (30) selon la revendication 13, où le dispositif de commande (10, 10A, 10B, 10C, 10D) est conçu pour être couplé sans fil ou avec fil via le port audio (4, 4A, 4B) à un dispositif auditif (22, 22A, 22B, 22C, 22D), tel qu'un casque ou un casque d'écoute.
